# EUROPEAN PATENT SPECIFICATION

(11) **EP 2 377 233 B1**
(45) Date of publication and mention of the grant of the patent: **26.08.2015**
(21) Application number: 09787625.4
(22) Date of filing: 07.01.2009
(51) Int. Cl.: H02M 3/335

(54) **ACTIVE CLAMP DEVICE AND CONVERTER INCLUDING SAID DEVICE**
AKTIV-KLEMMANORDNUNG UND WANDLER MIT DER ANORDNUNG
DISPOSITIF DE RÉTABLISSEMENT DE NIVEAU ACTIF ET CONVERTISSEUR COMPRENANT LEDIT DISPOSITIF

(43) Date of publication of application: 19.10.2011
(73) Proprietor: Lastrucci, Claudio, Loc. Vigliano, 50055 Lastra A Signa Firenze (IT)
(72) Inventor: Lastrucci, Claudio, Loc. Vigliano, 50055 Lastra A Signa Firenze (IT)
(74) Representative: Mannucci, Michele
(86) International application number: PCT/IT2009/000003
(87) International publication number: WO 2010/079518

(56) References cited:
- EP-A- 1 249 926
- US-A- 6 038 142
- US-A1- 2004 042 236
- US-B1- 6 259 235
- US-B1- 6 882 548

## Description

### Field of the Invention

The invention relates to improvements in clamp circuitries or devices and to converters including said clamp devices. The invention is suitable to be applied to a variety different switch-mode power conversion topologies. The puplished european patent application EP 1249926 discloses a power converter which has the features of the preamble of claim 1.

### Background of the Invention

Several power conversion topologies suffer from undesired energy storage in circuitry sections. This energy cannot be fully recovered during the power processing cycle. Typical situations of this kind arise in converters according to insulated flyback topologies, forward topologies, insulated sepic topologies and other power conversion devices.

The storage of energy in a part of the circuitry, that usually is due to the leakage inductance between the primary winding and the secondary winding of the insulating transformer, forces the designer to heavy compromises in terms of power handling, switching frequency, reliability, electromagnetic interference disturbance and overall energy conversion efficiency. Typically the leakage inductance in a coupled inductor or transformer assembly store a sensible portion of the overall energy transferred from the primary side of the transformer to the secondary side of the transformer. In most designs this energy is removed by a dissipative clamping network, that turns the energy portion stored in the non-ideal transformer, into heat. This is the first, most common and least effective method to preserve the power devices avoiding high voltage stress during operation.

The use of dissipative clamping networks, however, reduces the overall efficiency of the converter and does not fully satisfy the maximum voltage breakdown stress across the switching devices. The operative switching frequency of the circuitry is therefore limited and a considerable fraction of the power transferred by the circuitry is wasted.

Other converters include a so-called controlled active clamp device that acts as a bidirectional switch. In these devices at least part of the energy stored in a tank capacitor of the clamping circuit is recovered. However, these devices are quite complex and bulky, requiring a current sensing scheme, a voltage sensing scheme and a complex level shifting technique to drive a power device that acts as the clamping switch.

Examples of converters including active clamp devices are disclosed in US patents n. 6,836,413 and 6,038,142. In US patent 6,836,413 a full-bridge converter topology is disclosed, including a clamping network connected across the full bridge. The clamping network includes a diode and a tank capacitor, which is charged with energy from the input circuit. A controlled power switch is provided for recycling the energy stored in the capacitor towards the input circuit through an inductor. The controlled power switch of the clamping circuit requires a drive circuit, which is in turn controlled by the PWM signal of the full bridge drive control unit.

Moreover, some other approaches to the problem take advantage of resonant tanks but, generally speaking, do not ensure a fully satisfying solution to the above-mentioned drawbacks, allowing optimum behaviour at certain operating points of the converter dynamic, but not within the full operating range.

### Summary of the Invention

In accordance with the invention a power converter according to claim 1 is provided.

This arrangement allows an efficient clamping of the voltage across the switching device in the input circuit, as well as an efficient recovery of the energy stored in the tank capacitor by reversing the current through the clamping switch. Said reversal is achieved without the need for a drive circuit controlling the switching on of a separate switch, but by simply maintaining the clamping switch in the conduction state for a current recovery time, following the tank capacitor charging-time interval. Differently from active clamp circuits according to the state of the art, the clamping circuit according to the invention performs energy recovery, rather than energy dissipation on a dissipative resistor, but without requiring a complex control circuit generating a switch driving signal synchronized with the driving signal of the switching network in the input circuit of the converter.

The ideal clamp device that would fulfil the needs for a total recovery of the energy stored in the leakage inductance in a power conversion topology would behave as a diode that has negligible turn-on delay, negligible forward conduction drop and a definable reverse current conduction time. The ideal device would be a device that has a reverse recovery charge that can be larger than the forward transferred charge. No present active device allow to have such behaviour, but this can be realized with the device and method as described herebelow.

According to the invention, having the clamp current a positive direction toward a temporary storage capacitor (tank capacitor), the voltage drop developed on a series resistor connected in series to a clamping switch embodied e.g. by a power MOSFET, IGBT, BJT, or a "N" type power device, can be used to charge an R-C circuitry having the function of voltage-maintenance circuit at the gate of the clamping switch. The R-C circuitry can provide a time constant to hold the gate voltage of the clamping switch positive for a precise time frame, allowing the conductive device to be found in a full conduction state in the recycling part of the switching period once the current is desired to flow from the tank capacitor to the transformer.

The action of clamping the voltage developed across the leakage inductance, diverting the current to a storage tank capacitor, is the first part of the energy recovery process, in the power converter according to the same manner as in some state-of-the-art converters. The reversed current conduction of the bidirectional clamping switch, removing the energy stored in the tank capacitor and forwarding the current to the transformer, is the second part of the controlled recovery charge process, which is achieved with the clamp circuit according to the invention.

The clamping switch and the control circuit controlling its switching on and off based on the voltage across a current sense resistor is referred to here below also as a controlled reverse recovery charge device. The physical realization of the controlled reverse recovery charge device can also be implemented as a integrated device, based on conventional semiconductors manufacturing. Basically the behaviour that has to be achieved is that of a diode that has a quite long reverse recovery time, a large reverse recovery charge and that has a predictable behaviour in the temperature variations. Also a very defined time recovery current tail is appreciated and a low reverse voltage drop , during the recovery process, is desired to minimize the losses in the device. This is something that usually is considered a negative performance, but in the specific application can be used fruitfully to fulfil the energy recovery process.

The invention therefore also concerns a controlled reverse recovery charge device including a cathode and an anode, an electronically controlled switch arranged between said anode and said cathode, a circuit arrangement arranged and designed to switch said electronically controlled switch in a conduction state in response to a voltage increase across said anode and said cathode, and arranged and designed to maintain said switch in said conduction state for a time interval following reversal of a current flowing between said anode and said cathode.

Further advantageous embodiments and additional features of the invention are set forth in the annexed claims and will be described in greater detail here below, reference being made to the attached drawings.

### Brief Description of the Drawings

The features and advantages of the invention will become more readily understood from the following detailed description taken in conjunction with the appended claims and attached drawings, wherein:
Figs. 1, 2, 3 show three typical power converters according to the known art as described above;
Figs 4, 5 and 6 show three typical power converters embodying the invention;
Fig. 7 shows a schematic symbol representing a controlled reverse recovery charge device according to the invention;
Figs. 8 to 11 show different embodiments of possible implementations of the controlled reverse recovery charge device according to the invention;
Fig.12 is a diagram showing the meaningful voltage across the power switch in the circuit of Fig.1;
Fig.13 is a diagram of the meaningful voltage across the power switch in the circuit of Fig.4;
Fig.14 is an enlarged portion of the diagram of Fig.13; and
Fig.15 shows an enlarged portion of a diagram related to the meaningful current flowing through the controlled reverse recovery charge device (Dcrrc) in the circuit of Fig.4.

### Detailed Description of Embodiments of the Invention

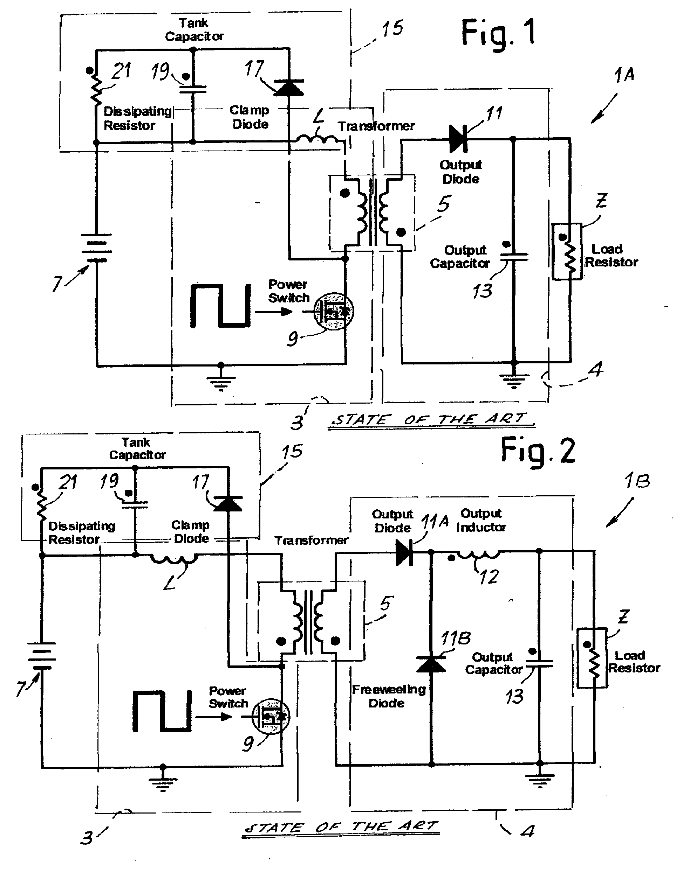

Figs. 1-3 show three different topologies of DC/DC power converters according to the state of the art, including a dissipative clamp circuit. The same reference numbers are used in the three embodiments to designate identical or similar components or parts of the circuit in the various embodiments. More specifically, Fig.1 shows an insulated flyback DC/DC converter, designated 1A as a whole. The converter 1A includes an input circuit 3 and an output circuit 4, connected to the primary winding and the secondary winding of a transformer 5, respectively. The input circuit is connected to a DC voltage source schematically shown at 7. Said source can be a battery, a source of renewable energy, a rectifier powered by an AC grid or any other possible DC voltage source. Voltage is applied across the primary winding of the transformer 5 by means of a controlled power switch 9. Said switch is schematically represented here as a power MOSFET switch for the sake of simplicity, but any other controlled switching device could be used for this purpose, e.g. a BJT, an IGBT or the like.

It should also be understood that different switching networks, such as a half bridge or a full bridge switching network could be used instead.

The power switch 9 is driven by a PWM driving signal, diagrammatically represented in Fig.1 as a square-shaped control signal, which causes on and off switching of the power switch 9.

The output circuit 4 includes an output diode 11 and an output capacitor 13, connected across the secondary winding of transformer 5. A generic load resistor Z is connected to the output terminals of the output circuit.

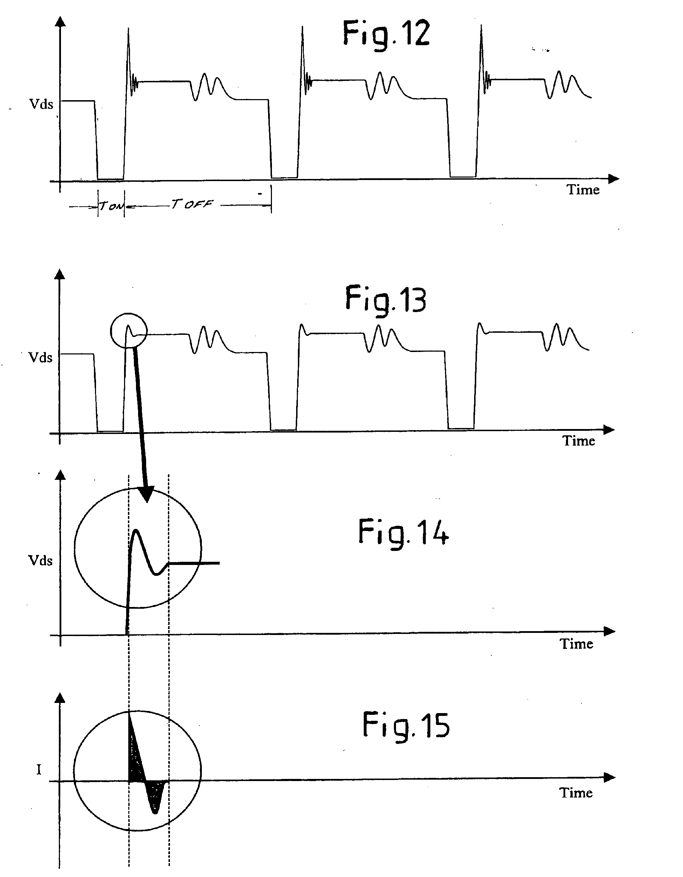

As known, due to the leakage inductance of the transformer 5, schematically represented by an induction L, when the power switch 9 is switched off, the voltage across the switching device 9 tends to increase dramatically. In order to avoid damages to the switching device 9, a clamp circuit 15 is connected across the primary winding of transformer 5. The purpose of the clamp circuit is to maintain the voltage across the switch 9 below a maximum threshold, thus avoiding damages to the switching device 9. In some embodiments of the state of the art, as shown in the example of Fig.1, said clamp circuit includes a diode 17 and an RC network, including a tank capacitor 19 and a dissipative resistor 21. The operation of this simple clamp circuit is as follows. The voltage increase caused by the leakage inductance L when the switching device 9 is switched off brings the diode 17 into conduction and current flows there though. Said current charges the tank or storage capacitor 19, thus avoiding a voltage peak across the switching device 9. Upon charge of the tank capacitor 19, the energy stored therein is dissipated on the resistance 21 and transformed into heat. Fig.12 shows the voltage across the power switching device 9 during three switching cycles. When the conducting phase (Ton) of the switching device 9 ends and the switch is opened, a voltage peak generates across the switch, the value of which is clamped by the clamp circuit 15.

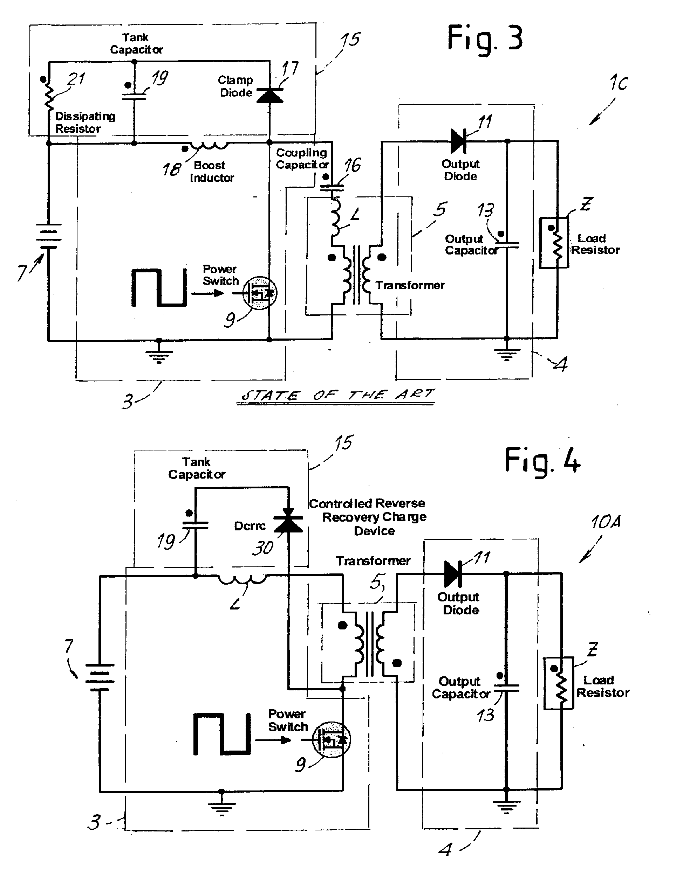

Figs. 2 and 3 show other DC/DC converter topologies, known in the art, using a similar dissipative clamp circuit 15. More specifically, Fig.2 shows a forward DC/DC converter 1B including an output circuit comprising a first and second output diodes 11A, 11B and an output inductor 12. Fig.3 shows an insulated sepic topology DC/DC converter 1C, the input circuit of which includes a coupling capacitor 16 and a boost inductor 18.

Figs. 4, 5 and 6 show schematic diagrams of corresponding DC/DC converters where the clamp circuit has been modified according to the present invention. The same reference numbers are used to indicate the same or equivalent components, parts and sections of the converters as in Figs. 1, 2 and 3. The modified DC/DC converters are designated 10A (flyback topology), 10B (forward topology) and 10C (insulated sepic topology) as a whole. The difference between the converters of Figs. 1, 2 and 3 and those of Figs. 4, 5 and 6 is mainly represented by the absence of the dissipative resistor 21 and by the replacement of the diode 17 with a more complex and functionally different component 30, which will be designate here below as a "controlled reverse recovery charge device". The function of said device is to be brought into the conduction state for charging the tank capacitor 19 of the clamp circuit 15 and to be maintained in the conduction state for a time interval following the reversal of the current flow, such that the energy stored in the tank capacitor 19 can be recovered through said device 30 and usefully injected in the input circuit 3 for transfer to the secondary winding of the transformer 5 and therefore to the output circuit 4.

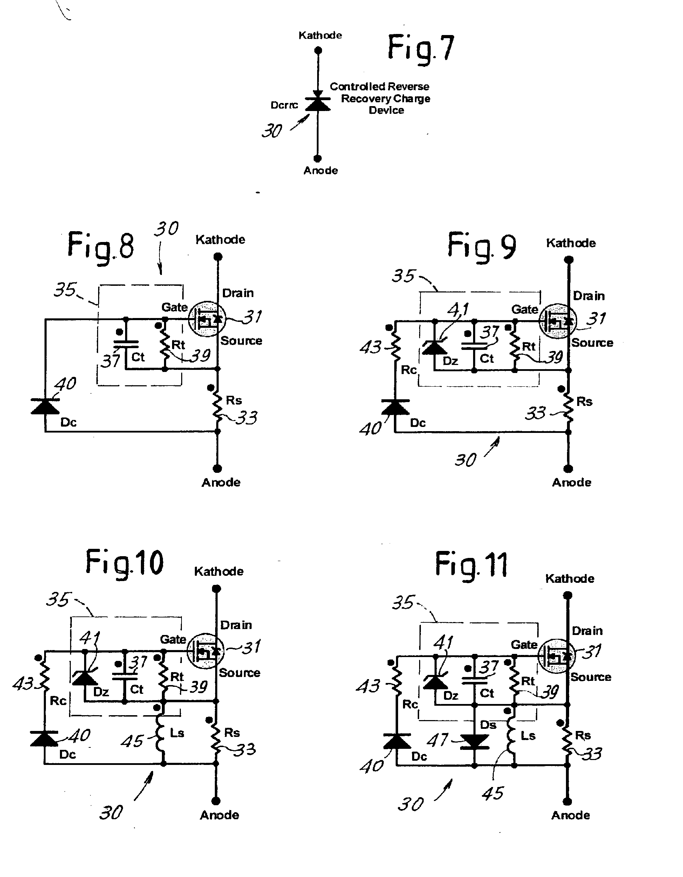

The controlled reverse recovery charge device is shown in isolation in Fig.7 and Figs. 8 to 12 show four possible implementations of said device.

Referring first to Fig.8, between two terminals (cathode and anode) of the controlled reverse recovery charge device 30 a power switch 31 is arranged. In the embodiment shown in the figures said power switch, referred to here below also as clamping switch, is in the form of a power MOSFET switch. However, in other embodiments different kinds of power switches can be used, such as a BJT, an N-type power device, a IGBT or other alternative power switches or devices. In some preferred embodiments the clamping switch 31 has an internal diode (schematically shown in Figs. 8 to 11). Preferably, the clamping switch 31 also has an internal capacity.

The source and drain of the clamping switch are respectively connected to the anode and cathode of the controlled reverse recovery charge device. A current sense resistor 33 is connected between the anode and the source of the clamping switch 31 for the purposes described later on. In some embodiments an R-C network 35 is connected across the gate and source terminals of the clamping switch 31. In some preferred embodiments the network 35 includes capacitor 37 and a resistor 39 arranged in parallel. In other embodiments, the capacitor 37 can be omitted and the internal capacitor of the clamping switch 31 is used instead, for the same function, which will become apparent from the description later on.

The network 35 (including the capacitor 37 and/or the internal capacitor of the clamping switch 31) will be referred to here below as a voltage-maintenance network, since it has the purpose of maintaining for a pre-set time interval a positive voltage at the gate of the clamping switch 31, such that the clamping switch 31 is maintained in its conduction state for a time interval as required for the operation of the controlled reverse recovery charge device. A diode 40 is connected between the anode of the device 30 and the gate of the clamping switch 31.

Referring by way of example to the embodiment of Fig.4, the device 30 is connected across the primary winding of the transformer 5, such that the anode is connected between the primary winding and the power switching device 9 while the cathode is connected at the other terminal of the primary winding of transformer 5, essentially in the same position as the diode 17 of the clamp circuit 15 of the state-of-the-art circuit 1.

The operation of the clamp circuit 15 in Fig.4 is as follows. When the power switching device 9 opens, the voltage across the switching device 9 tends to increase due to the leakage inductance of the transformer 5. This voltage increase across the cathode and anode of the device 30 reaches a value, which brings the internal diode of the clamping switch 31 into conduction. As a consequence, current starts to flow across the current sense resistor 33, the current flow causing a voltage drop across said resistor 33. The voltage across the current sense resistor is applied across the gate and the source of the clamping switch 31, which is thus brought into a full conduction state. Switching on of the clamping switch 31 causes the current to flow from the input circuit 3 towards the tank capacitor 19 that is thus charged by the current flowing across the current sense resistor 33 and the clamping switch 31.

When the voltage across the current sense resistor 33 is reversed, current starts to flow in the inverse direction, from the tank capacitor 19 towards the input circuit 3 of the converter 10A. In order for this reverse energy recovery phase to take place, the clamping switch 31 must remain conductive for a time interval, which is longer than the tank capacitor charging time. The voltage maintenance network 35 serves this purpose. The time constant of the RC network 35 is longer than the time required for the current reversal, such that once the voltage across the current sense resistor 33 is reversed, the switch 31 is still in a conduction state and allows energy recovery through the controlled reverse recovery charge device 30.

Fig.13 shows the voltage across the power switching device 9 of the converter 10A in three subsequent switching cycles. Compared with the diagram of Fig.12, in the embodiment according to the invention a much smoother and lower peak in the drain-source voltage applied across the switching device 9 occurs. The enlargement shown in Fig. 14 also clearly shows that not only the peak voltage value is reduced, but in addition thereto the typical voltage oscillations generated at each switching cycle in a common clamp circuit of the state of the art (Fig.12) are substantially eliminated. This contributes to a reduction of the electromagnetic noise generated by the device.

The current flowing across the controlled reverse recovery charge device is shown in the enlargement of Fig. 15, from which the advantages in terms of energy recovery can be appreciated.

Fig.9 shows a modified embodiment of the controlled reverse recovery charge device according to the invention. The same reference numbers of Fig.8 are used in Fig.9 for the same or equivalent components or parts of the device. In Fig.9 the device 30 includes a Zener diode 41 in the RC voltage maintenance network, in parallel to the resistor 39 and the capacitor 37. In addition to the Zener diode 41, the device 30 of Fig.9 also includes a resistor 43 in series with the diode 40. This arrangement reduces the voltage peak on the gate of the clamping switch 31.

Fig.10 shows a further modified embodiment of the device of Fig.9. The device of Fig. 10 differs from the device of Fig.9 for the addition of an inductor 45 in parallel to the current sense resistor 33. The function of the inductor 45 is to reduce the energy dissipation on the current sense resistor 33 during the clamping step as well as during the energy recovery step. Part of the current flows through the inductor 45 rather than through the resistor 33, thus reducing the amount of energy dissipated by the resistor 33.

Finally, in the embodiment of Fig.11 a diode 47 has been added in parallel to the current sense resistor 33, having the same function of reducing the current flowing through the resistor 33 and thus of reducing the energy dissipation.

The features of the embodiments of Figs 8-11 can be variously combined to one another.

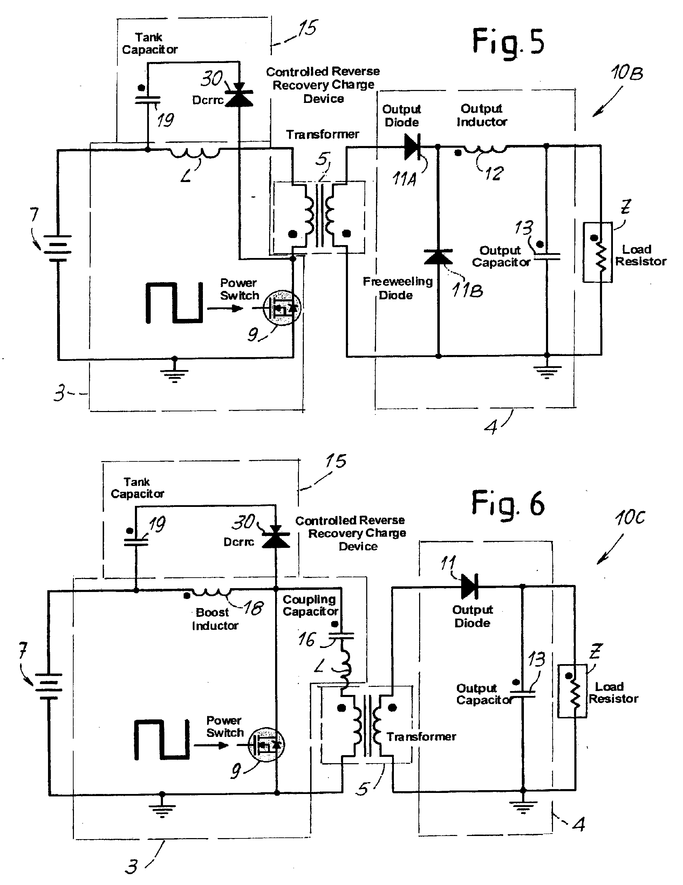

The device 30 disclosed here above referring to Figs. 8-11 and to the converter of Fig.4 can be used also in other converter topologies as schematically shown in Figs. 5 and 6, where the same reference numbers are used to designate parts, components or elements of the circuitry corresponding, equal or equivalent to those described above with respect to Figs. 1-4.

## Claims

1. A power converter comprising:
- a transformer (5);
- an input circuit (3) connected to the transformer and including at least one switching device (9) which connects a voltage source (7) across the transformer(5);
- an output circuit (4) coupled to the input circuit by said transformer;
- an active clamp circuit (15) including a tank capacitor (19) and a clamping switch (31) connecting said tank capacitor (19) to said input circuit (3), said clamping switch (31) being brought into conduction for charging said tank capacitor (19);
**characterized in that** said clamping switch (31) is controlled by 9 control circuit responsive to a voltage increase in said input circuit (3) following switching-off of said at least one switching device (9), said control circuit (33, 37, 39, 40) is configured to maintain said clamping switch (31) in a conduction state for a time interval exceeding the tank capacitor-charging time, such as to allow a reverse current flow from said tank capacitor (19) to said transformer (5) through said clamping switch (31), thus recovering energy stored in said tank capacitor through said clamping switch.

2. Power converter according to claim 1, **characterized in that** said control circuit includes a voltage maintenance network (35) connected to a gate of said clamping switch (31), said voltage maintenance network having a time constant higher than the tank capacitor-charging interval, such that said clamping switch (31) is maintained in the conduction state in a recycling interval, during which a reverse current flows from said tank capacitor (19) to said input circuit (3).

3. Power converter according to claim 2, **characterized in that** said voltage maintenance network (35) includes a resistor (39) and a capacitor (37).

4. Power converter according to claim 3, **characterized in that** said capacitor is an internal capacitor of said clamping switch.

5. Power converter according to claim 3, **characterized in that** said resistor (39) and said capacitor (37) of said voltage maintenance network (35) are arranged in parallel.

6. Power converter according to claim 2 or 3 or 4 or 5, **characterized in that** said voltage maintenance network (35) is connected across a gate and a source of said clamping switch (31).

7. Power converter according to one or more of claims 2 to 6, **characterized in that** said voltage maintenance network (35) includes a Zener diode (41).

8. Power converter according to claims 5 and 7 **characterized in that** said Zener diode (41) is arranged in parallel to said capacitor (37) and said resistor (39) of the voltage maintenance network (35).

9. Power converter according to one or more of the preceding claims, **characterized in that** said clamping switch (31) includes a diode, said diode being brought into conduction by said voltage increase.

10. Power converter according to one or more of the preceding claims, **characterized by** a current sense resistor (33) in series with said clamping switch (31).

11. Power converter according to claim 10, **characterized in that** an inductor (45) is arranged in parallel to said current sense resistor (33).

12. Power converter according to claim 10 or 11, **characterized in that** a diode (47) is arranged in parallel to said current sense resistor (33).

13. Power converter according to one or more of the preceding claims, **characterized by** a diode (40) connected between said input circuit (3) and a gate of said clamping switch (31), said diode being brought in conduction state by said voltage increase.

14. Power converter according to claim 13, **characterized in that** said diode (40) is connected in series with a resistor (43) arranged between said diode (40) and said voltage maintenance network (35).

## Patentansprüche

1. Leistungswandler mit:
- einem Transformator (5),
- einer Eingangsschaltung (3), die mit dem Transformator verbunden ist und zumindest eine Schaltvorrichtung (9) aufweist, die eine Spannungsquelle (7) über den Transformator (5) verbindet,
- einer Ausgabeschaltung (4), die über den Transformator mit der Eingangsschaltung verbunden ist,
- einer aktiven Klemmschaltung (15) mit einem Tankkondensator (19) und einem Klemmschalter (31), die den Tankkondensator (19) mit der Eingangsschaltung (3) verbindet, wobei der Klemmschalter (31) zum Laden des Tankkondensator (19) zum Leiten gebracht wird,
**dadurch gekennzeichnet, dass** der Klemmschalter (31) durch eine Steuerschaltung gesteuert wird, die auf einen Spannungsanstieg in der Eingangsschaltung (3), der einem Ausschalten der zumindest einen Schaltvorrichtung (9) folgt, anspricht, wobei die Steuerschaltung (33, 37, 39, 40) ausgebildet ist, um den Klemmschalter (31) in einem Leitungszustand für ein Zeitintervall zu halten, das die Tankkondensator-Ladezeit übersteigt, um so einen Rückstromfluss von dem Tankkondensator (19) zu dem Transformator (5) durch den Klemmschalter (31) zu erlauben, um somit Energie, die in dem Tankkondensator gespeichert ist, durch den Klemmschalter zurückzugewinnen.

2. Leistungswandler nach Anspruch 1, **dadurch gekennzeichnet, dass** die Steuerschaltung ein Spannungserhaltungsnetzwerk (35) aufweist, das mit einem Gate der Klemmschaltung (31) verbunden ist, wobei das Spannungserhaltungsnetzwerk eine Zeitkonstante aufweist, die höher ist als das Tankkondensator-Ladeintervall, sodass die Klemmschaltung (31) in dem Leitungszustand in einem Wiedergewinnungsintervall gehalten wird, während dessen ein Rückstrom von dem Tankkondensator (19) zu der Eingangsschaltung (3) fließt.

3. Leistungswandler nach Anspruch 2, **dadurch gekennzeichnet, dass** das Spannungserhaltungsnetzwerk (34) einen Widerstand (89) und einen Kondensator (37) aufweist.

4. Leistungswandler nach Anspruch 3, **dadurch gekennzeichnet, dass** der Kondensator ein interner Kondensator der Klemmschaltung ist.

5. Leistungswandler nach Anspruch 3, **dadurch gekennzeichnet, dass** der Widerstand (39) und der Kondensator (37) des Spannungserhaltungsnetzwerkes (35) parallel angeordnet sind.

6. Leistungswandler nach Anspruch 2 oder 3 oder 4 oder 5, **dadurch gekennzeichnet, dass** das Spannungserhaltungsnetzwerk (35) über ein Gate und eine Source des Klemmschalters (31) kreuzend verbunden ist.

7. Leistungswandler nach einem oder mehreren der Ansprüche 2 bis 6, **dadurch gekennzeichnet, dass** das Spannungserhaltungsnetzwerk (35) eine Zenerdiode (41) aufweist.

8. Leistungswandler nach den Ansprüchen 5 und 7, **dadurch gekennzeichnet, dass** die Zenerdiode (41) parallel zu dem Kondensator (37) und dem Widerstand (39) des Spannungserhaltungsnetzwerkes (35) angeordnet ist.

9. Leistungswandler nach einem oder mehreren der vorstehenden Ansprüche, **dadurch gekennzeichnet, dass** der Klemmschalter (31) eine Diode aufweist, wobei die Diode durch den Spannungsanstieg zum Leiten gebracht wird.

10. Leistungswandler nach einem oder mehreren der vorstehenden Ansprüche, **gekennzeichnet durch** einen Strom-Sensorwiderstand (33) in Reihe mit dem Klemmschalter (31).

11. Leistungswandler nach Anspruch 10, **dadurch gekennzeichnet, dass** ein Induktor (45) parallel zu dem Strom-Sensorwiderstand (33) angeordnet ist.

12. Leistungswandler nach Anspruch 10 oder 11, **dadurch gekennzeichnet, dass** die Diode (47) parallel zu dem Strom-Sensorwiderstand (33) angeordnet ist.

13. Leistungswandler nach einem oder mehreren der vorstehenden Ansprüche, **gekennzeichnet durch** eine Diode (40), die zwischen der Eingangsschaltung (3) und einem Gate des Klemmschalters (31) geschaltet ist, wobei die Diode **durch** den Spannungsanstieg zum Leiten gebracht wird.

14. Leistungswandler nach Anspruch 13, **dadurch gekennzeichnet, dass** die Diode (40) in Reihe mit einem Widerstand (43) geschaltet ist, der zwischen der Diode (40) und dem Spannungserhaltungsnetzwerk (35) angeordnet ist.

## Revendications

1. Un convertisseur de puissance comprenant :
- un transformateur (5) ;
- un circuit d'entrée (3) connecté au transformateur et incluant au moins un dispositif de commutation (9) qui connecte une source de tension (7) à travers le transformateur (5) ;
- un circuit de sortie (4) couplé au circuit d'entrée par ledit transformateur ;
- un circuit de rétablissement de niveau actif (15) incluant un condensateur de stockage (19) et un commutateur de rétablissement (31) connectant ledit condensateur de stockage (19) audit circuit d'entrée (3), ledit commutateur de rétablissement (31) étant mis en conduction pour charger ledit condensateur de stockage (19) ;
caratérisé en ce que ledit commutateur de rétablissement (31) est commandé par un circuit de commande répondant à une augmentation de tension dans ledit circuit d'entrée (3) suite à une mise en position d'arrêt dudit dispositif de commutation (9), ledit circuit de commande (33, 37, 39, 40) est configuré pour maintenir ledit commutateur de rétablissement (31) dans un état de conduction pendant une durée excédant le temps de chargement du condensateur de stockage, de manière à permettre un flux de courant inverse allant dudit condensateur de stockage (19) audit transformateur (5) à travers ledit commutateur de rétablissement (31), de sorte à récupérer de l'énergie stockée dans ledit condensateur de stockage à travers ledit commutateur de rétablissement.

2. Convertisseur de puissance selon la revendication 1, **caractérisé en ce que** ledit circuit de commande inclut un réseau de maintien de tension (35) connecté à une porte dudit commutateur de rétablissement (31), ledit réseau de maintien de tension ayant une constante de temps supérieure à l'intervalle de chargement du condensateur de stockage, de sorte que ledit commutateur de rétablissement (31) soit maintenu dans l'état de conduction dans un intervalle de recyclage, durant lequel un courant inverse circule dudit condensateur de stockage (19) audit circuit d'entrée (3).

3. Circuit de puissance selon la revendication 2, **caractérisé en ce que** ledit réseau de maintien de tension (35) inclut une résistance (39) et un condensateur (37).

4. Circuit de convertisseur selon la revendication 3, **caractérisé en ce que** ledit condensateur est un condensateur interne dudit commutateur de rétablissement.

5. Convertisseur de puissance selon la revendication 3, **caractérisé en ce que** ladite résistance (39) et ledit condensateur (37) dudit réseau de maintien de tension (35) sont agencés en parallèle.

6. Convertisseur de puissance selon la revendication 2 ou 3 ou 4 ou 5, **caractérisé en ce que** ledit réseau de maintien de tension (35) est connecté à travers une porte et une source dudit commutateur de rétablissement (31).

7. Convertisseur de puissance selon une ou plusieurs des revendications 2 à 6, **caractérisé en ce que** ledit réseau de maintien de tension (35) inclut une diode Zener (41).

8. Convertisseur de puissance selon les revendications 5 et 7, **caractérisé en ce que** ladite diode Zener (41) est agencée en parallèle avec ledit condensateur (37) et à ladite résistance (39) du réseau de maintien de tension (35).

9. Convertisseur de puissance selon une ou plusieurs des revendications précédentes, **caractérisé en ce que** ledit commutateur de rétablissement (31) inclut une diode, ladite diode étant mise en conduction par ladite augmentation de tension.

10. Convertisseur de puissance selon une ou plusieurs des revendications précédentes, **caractérisé par** une résistante de détection de courant (33) en série avec ledit commutateur de rétablissement (31).

11. Convertisseur de puissance selon la revendication 10, **caractérisé en ce qu'**une inductance (45) est agencée en parallèle avec ladite résistance de détection de courant (33).

12. Convertisseur de puissance selon la revendication 10 ou 11, **caractérisé en ce qu'**une diode (47) est agencée en parallèle avec ladite résistance de détection de courant (33).

13. Convertisseur de puissance selon une ou plusieurs des revendications précédentes, **caractérisé par** une diode (40) connectée entre ledit circuit d'entrée (3) et une porte dudit commutateur de rétablissement (31), ladite diode étant mise en état de conduction par ladite augmentation de tension.

14. Convertisseur de puissance selon la revendication 13, **caractérisé en ce que** ladite diode (40) est connectée en série avec une résistance (43) agencée entre ladite diode (40) et ledit réseau de maintien de tension (35).
